# EUROPEAN PATENT APPLICATION

(11) **EP 4 685 680 A1**
(43) Date of publication of application: **28.01.2026**
(21) Application number: 24797325.8
(22) Date of filing: 11.04.2024
(51) Int. Cl.: G06F 21/60, G06F 21/62, G06F 21/33, G06F 21/42, G06F 21/64, H04L 9/32, H04L 9/08, G06F 21/53

(54) **ELECTRONIC DEVICE AND METHOD FOR CONTROLLING ACCESS TO APPLET**

(30) Priority: 24.04.2023 KR 20230053434; 16.05.2023 KR 20230063423
(71) Applicant: Samsung Electronics Co., Ltd., Suwon-si, Gyeonggi-do 16677 (KR)
(72) Inventor: KIM, Yangkeun, Suwon-si Gyeonggi-do 16677 (KR); KANG, Sangmook, Suwon-si Gyeonggi-do 16677 (KR); MOON, Euiseong, Suwon-si Gyeonggi-do 16677 (KR); CHO, Seonghyeok, Suwon-si Gyeonggi-do 16677 (KR); CHO, Seunghyeon, Suwon-si Gyeonggi-do 16677 (KR)
(74) Representative: Gulde & Partner
(86) International application number: PCT/KR2024/004843
(87) International publication number: WO 2024/225669

(57) **Abstract**

This electronic device may comprise a processor. The electronic device may comprise a security element. The processor may be configured to identify, on the basis of a software application, an event for executing a function of an applet within the security element. The processor may be configured to transfer, on the basis of the identified event, certification information regarding the software application and package information regarding the software application from a rich execution environment (REE) of the processor to a trusted execution environment (TEE) of the processor. The processor may be configured to generate, on the TEE, a value for controlling access to the applet, on the basis of identification information of the security element that has been acquired from the security element, and the certification information and the package information. The processor may be configured to execute the function on the basis of the value.

## Description

### [Technical Field]

The following descriptions relate to an electronic device and a method for controlling an access to an applet.

### [Background Art]

An electronic device may include a component for security. For example, the component for security may be referred to as a security circuit, a security chip set, or a security element. For example, the electronic device may provide various security-related services based on the component for security.

The above-described information may be provided as related art for the purpose of helping the understanding of the present disclosure. No claim or determination is raised as to whether any of the above-described content may be applied as prior art related to the present disclosure.

### [Disclosure]

### [Technical Solution]

An electronic device may comprise a processor. The electronic device may comprise a security element. The processor may be configured to identify, based on a software application, an event for executing a function of an applet in the security element. The processor may be configured to deliver, based on the identified event, certification information of the software application and package information of the software application from a rich execution environment (REE) of the processor to a trusted execution environment (TEE) of the processor. The processor may be configured to generate, based on identification information of the security element obtained from the security element, the certification information, and the package information, a value for controlling an access to the applet, on the TEE. The processor may be configured to execute, based on the value, the function.

A method performed by an electronic device may comprise identifying, based on a software application, an event for executing a function of an applet in a security element of the electronic device. The method may comprise delivering, based on the identified event, certification information of the software application and package information of the software application from a rich execution environment (REE) to a trusted execution environment (TEE). The method may comprise generating, based on identification information of the security element obtained from the security element, the certification information, and the package information, a value for controlling an access to the applet, on the TEE. The method may comprise executing, based on the value, the function.

An electronic device may comprise memory. The electronic device may comprise at least one processor including a security element. The memory may include one or more instructions that, when executed by the at least one processor, cause the at least one processor to identify, based on a software application, an event for executing a function of an applet in the security element of the electronic device. The memory may include one or more instructions that, when executed by the at least one processor, cause the at least one processor to deliver, based on the identified event, certification information of the software application and package information of the software application from a rich execution environment (REE) to a trusted execution environment (TEE). The memory may include one or more instructions that, when executed by the at least one processor, cause the at least one processor to generate, based on identification information of the security element obtained from the security element, the certification information, and the package information, a value for controlling an access to the applet, on the TEE. The memory may include one or more instructions that, when executed by the at least one processor, cause the at least one processor to execute, based on the value, the function.

### [Description of the Drawings]

FIG. 1 is a block diagram of an electronic device in a network environment according to various embodiments.
FIG. 2 illustrates an example of a simplified block diagram of an electronic device according to various embodiments.
FIGS. 3A and 3B illustrate an example of a method for injecting an access rule into a security element.
FIG. 3C illustrates an example of a method for performing an access to an applet of a security element.
FIGS. 4A and 4B illustrate an example of a method for injecting an access rule based on identification information of a security element in a local region of an electronic device according to an embodiment.
FIG. 5 illustrates an example of a method for injecting an access rule based on identification information of a security element by using an external electronic device according to an embodiment.
FIG. 6 illustrates an example of a method for performing an access to an applet by using an access rule based on identification information of a security element according to an embodiment.
FIG. 7A illustrates an example of a visual object displayed according to a result of an integrity check of an electronic device according to an embodiment.
FIG. 7B illustrates an example of a visual object displayed according to a result of an allow list check of a software application according to an embodiment.
FIG. 8A illustrates an example of an operation flow for injecting an access rule based on identification information of a security element according to an embodiment.
FIG. 8B illustrates an example of an operation flow for performing an access to an applet by using an access rule based on identification information of a security element according to an embodiment.
FIG. 9 illustrates an example of a flowchart for a method for controlling an access to an applet of a security element according to an embodiment.

### [Mode for Invention]

Terms used in the present disclosure are used only to describe a specific embodiment, and may not be intended to limit a range of another embodiment. A singular expression may include a plural expression unless the context clearly means otherwise. Terms used herein, including a technical or a scientific term, may have the same meaning as those generally understood by a person with ordinary skill in the art described in the present disclosure. Among the terms used in the present disclosure, terms defined in a general dictionary may be interpreted as identical or similar meaning to the contextual meaning of the relevant technology and are not interpreted as ideal or excessively formal meaning unless explicitly defined in the present disclosure. In some cases, even terms defined in the present disclosure may not be interpreted to exclude embodiments of the present disclosure.

In various embodiments of the present disclosure described below, a hardware approach will be described as an example. However, since the various embodiments of the present disclosure include technology that uses both hardware and software, the various embodiments of the present disclosure do not exclude a software-based approach.

In addition, in the present disclosure, the term 'greater than' or 'less than' may be used to determine whether a particular condition is satisfied or fulfilled, but this is only a description to express an example and does not exclude description of 'greater than or equal to' or 'less than or equal to'. A condition described as 'greater than or equal to ' may be replaced with 'greater than', a condition described as 'less than or equal to' may be replaced with 'less than', and a condition described as ' greater than or equal to and less than' may be replaced with 'greater than and less than or equal to'. In addition, hereinafter, 'A' to 'B' refers to at least one of elements from A (including A) to B (including B).

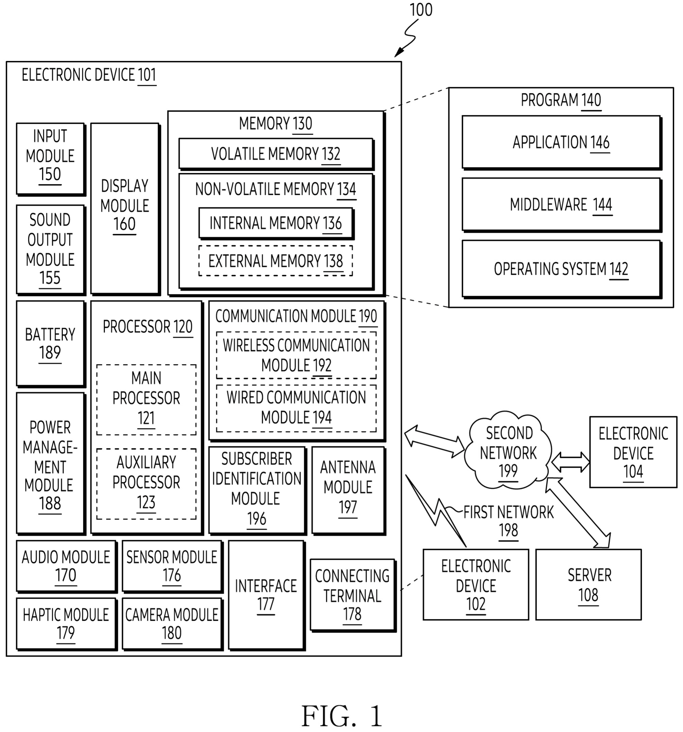

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

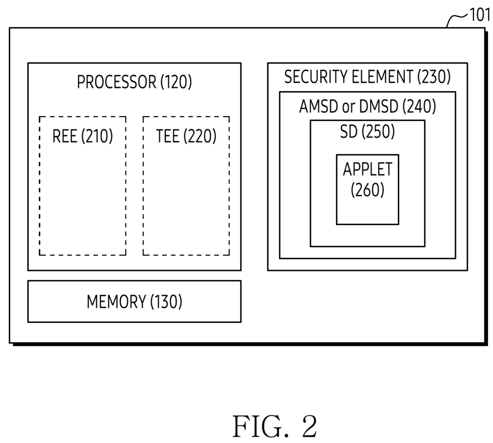

FIG. 2 illustrates an example of a simplified block diagram of an electronic device according to various embodiments.

An electronic device 101 of FIG. 2 may include at least a portion of the electronic device 101 of FIG. 1. For example, the electronic device 101 may include a processor 120 and memory 130. For example, the processor 120 may be referred to as an application processor (AP).

Referring to FIG. 2, the processor 120 may include a rich execution environment (REE) 210 and a trusted execution environment (TEE) 220. For example, the REE 210 may include a region in which the processor 120 is configured to perform normal data computation and processing. For example, the REE 210 may be referred to as a normal environment. For example, the TEE 220 may include a region in which the processor 120 is configured to perform computation and processing of security-related data. For example, the TEE 2g20 may be referred to as a secure environment. In other words, the TEE 220 may indicate an environment for processing data that requires a relatively higher level of security than the REE 210. The REE 210 and the TEE 220 may be implemented in a state in which they are separated in hardware, separated in software, or separated in both hardware and software.

For example, the processor 120 may include various processing circuitry and/or a plurality of processors. For example, the term "processor" used in the document, including the claims, may include various processing circuitry including at least one processor, and one or more of the at least one processor may be configured to perform various functions described below, individually or collectively, in a distributed manner. As used herein, terms such as "processor," "at least one processor," and "one or more processors," when described as being configured to perform various functions, encompass, for a non-limiting example, situations in which one processor performs a portion of the cited functions while another processor(s) performs another portion of the cited functions, as well as situations in which one processor is capable of performing all of the cited functions. In addition, the at least one processor may include a combination of processors that, for example, perform various enumerated or disclosed functions in a distributed manner. The at least one processor may execute program instructions to achieve or perform the various functions.

Referring to FIG. 2, the electronic device 101 may include a security element (or a secure element) (SE) 230. The security element 230 may be referred to as a security circuit, a security chip set, a secure processor, or a secure processor unit (SPU). For example, the security element 230 may be embedded inside the electronic device 101. For example, the security element 230 may include an embedded secure element (eSE). In FIG. 2, although the security element 230 included in the electronic device 101 is exemplified as a component separate from the processor 120, which is the AP, an embodiment of the present disclosure is not limited thereto. For example, the security element 230 and the processor 120 may be included in one component, such as a system on chip (SoC). For example, the security element 230 and the processor 120 may be referred to as at least one processor. Hereinafter, for convenience of explanation, the security element 230 is exemplified as being included in the electronic device 101 as a separate component, but an embodiment of the present disclosure is not be construed as being limited thereto.

Although not illustrated in FIG. 2, the TEE 220 may be connected to the security element 230. For example, a security channel (or a secure channel) may be formed between the TEE 220 and the security element 230. For example, the security channel may be implemented via a physical interface such as a serial peripheral interface (SPI) or an inter-integrated circuit (I2C). The formation of the security channel may include activation of a secure session. When the security channel is formed, the processor 120 may perform communication based on a designated protocol between the processor 120 and the security element 230. For example, the processor 120 may transmit or receive data via the security channel based on the designated protocol. For example, the data may include at least one of a command, a key, identification information, or an access rule. However, an embodiment of the present disclosure is not limited thereto. The access rule may indicate a value for controlling an access to an applet 260. For example, the access rule may be configured as a binary bit.

For example, the security element 230 may include an authorized management security domain (AMSD) or a delegated management security domain (DMSD) 240 for activating the secure session based on the designated protocol. For example, the AMSD or DMSD 240 may perform chain verification of a certificate by using a root key based on the designated protocol. When the verification is successful, the AMSD or DMSD 240 may generate the security channel by activating the secure session. For example, the AMSD or DMSD 240 may be referred to as a first security domain.

For example, the security element 230 may include a security domain (SD) 250 that includes the applet 260 associated with a specific software application. For example, the SD 250 may be generated for each service provider. For example, when a plurality of service providers exist, the security element 230 may include a plurality of SDs. For example, each of the plurality of SDs may include at least one applet. For example, the SD 250 may be included in the AMSD or DMSD 240. The applet 260 may perform a function requested via an application programming interface (API) called from the associated specific software application. The API may include an API defined for use of the applet 260. For example, the API may include an open mobile API, or an API specific to the security element 230. For example, the function may include at least one of generation or deletion of a key, generation or verification of a signature, encryption or decryption of data, or storage or deletion of data.

For example, the memory 130 may include one or more instructions that, when executed by the at least one processor (e.g., the processor 120, or the security element 230), cause an operation of the at least one processor. For example, in the memory 130, the one or more instructions (or commands) indicating a computation and/or an operation to be performed by the at least one processor of the electronic device 101 on data may be stored. A set of the one or more instructions may be referred to as a program, firmware, an operating system, a process, a routine, a sub-routine, and/or an application. Hereinafter, a software application being installed in the electronic device 101 may mean that the one or more instructions provided in a form of a software application are stored in the memory 130, and that the one or more applications are stored in a format (e.g., a file having an extension designated by an operating system of the electronic device 101) executable by the at least one processor of the electronic device 101. According to an embodiment, the electronic device 101 may perform an operation according to an embodiment of the present disclosure by executing the one or more instructions stored in the memory 130.

In FIG. 2, components included in the electronic device 101 are exemplified, but the components of FIG. 2 are merely an example of at least some components included in the electronic device 101, and an embodiment of the present disclosure is not limited thereto. For example, the electronic device 101 may include a transceiver for performing communication with an external electronic device.

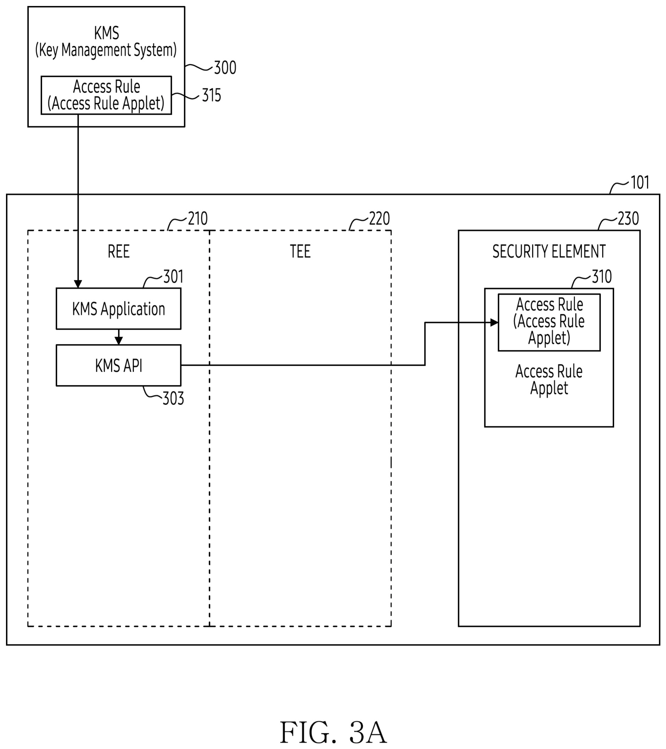

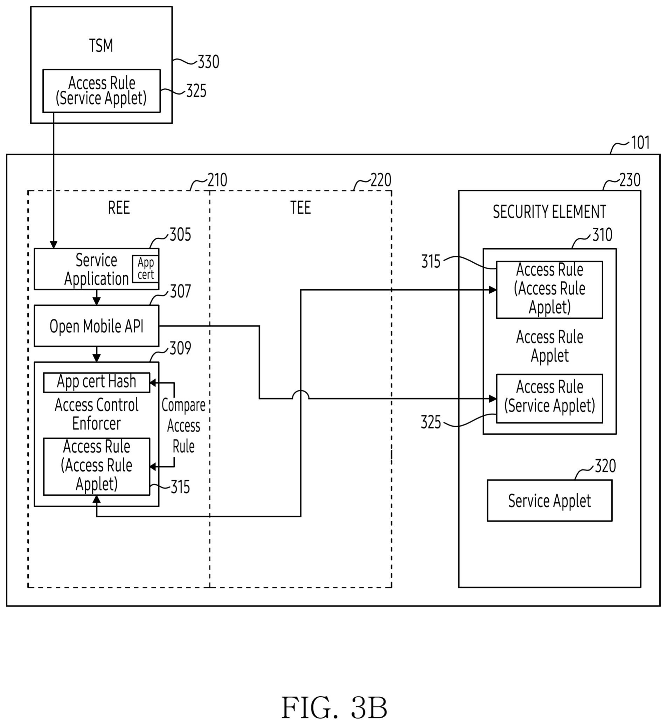

FIGS. 3A and 3B illustrate an example of a method for injecting an access rule into a security element. The access rule may indicate a value for controlling an access to an applet. The injecting may be understood as being substantially the same as storing.

An electronic device 101 of FIGS. 3A and 3B may include at least a portion of the electronic device 101 of FIG. 2. For example, the electronic device 101 of FIGS. 3A and 3B may include the REE 210, the TEE 220, and the security element 230. The same reference numeral may be used for the same description.

FIG. 3A illustrates a method in which the electronic device 101 obtains an access rule 315 for an applet 310 (hereinafter, access rule applet) for controlling an access to a specific applet from an external electronic device (e.g., a key management system (KMS) 300) and injects it into the security element 230. For example, the electronic device 101 may generate, in the security element 230, a security domain (SD) for a service provider that provides a specific service. For example, the electronic device 101 may inject the access rule 315 for an access to the access rule applet 310, which controls an access to a service applet, into the access rule applet 310. For example, the service applet may indicate an applet associated with a software application that provides the specific service. For example, the access rule 315 for an access to the access rule applet 310 may be injected into the security element 230 before the service applet is installed on the electronic device 101.

Referring to FIG. 3A, the REE 210 in a processor (e.g., the processor 120 of FIG. 2) of the electronic device 101 may execute a software application (hereinafter, KMS application) 301 for a key management system (KMS). For example, the KMS 300 may indicate a system or a server for managing a life cycle of an encrypted key. The KMS 300 may be referred to as an external electronic device. For example, the REE 210 may obtain the access rule 315 for an access to the access rule applet 310 from the KMS 300 by using the KMS application 301. The access rule 315 may include a certificate of a software application authorized to access the access rule applet 310, or a hashed value of the certificate. For example, the REE 210 may be associated with the KMS application 301, and may inject the access rule 315 into the access rule applet 310 based on a KMS API 303 defined for use of the access rule applet 310.

FIG. 3B illustrates an example of a method for injecting a service applet 320 via an external electronic device (e.g., a trusted service manager (TSM) 330 of a service provider that provides a specific service).

Referring to FIG. 3B, the REE 210 may execute a software application (hereinafter, a service application) 305 that provides the specific service. For example, the REE 210 may obtain an access rule 325 for the service applet 320 by using the service application 305. For example, the REE 210 may be associated with the service application 305, and may inject the access rule 325 into the access rule applet 310 by using an open mobile API 307, which is an API for accessing the security element 230.

For example, as the REE 210 identifies an event for accessing the service applet 320 via the service application 305, the REE 210 may obtain the access rule 315 from the access rule applet 310 via an access control enforcer 309. The access control enforcer 309 may compare the access rule 315 with an access rule calculated based on certification information of the service application 305. The certification information may include a certificate (App cert) of the service application 305 or a hashed value (App cert Hash) of the certificate. For example, when the REE 210, based on the comparison, identifies that the service application 305 is allowed to access the access rule applet 310, the REE 210 may inject the access rule 325 for the service applet 320 into the access rule applet 310 by using the open mobile API 307.

As described above, the electronic device 101 or the REE 210 may inject (or store) access rules into an applet (e.g., the access rule applet 310) for controlling an access to an applet. The access rules may include access rules for the access rule applet 310 and the service applet 320.

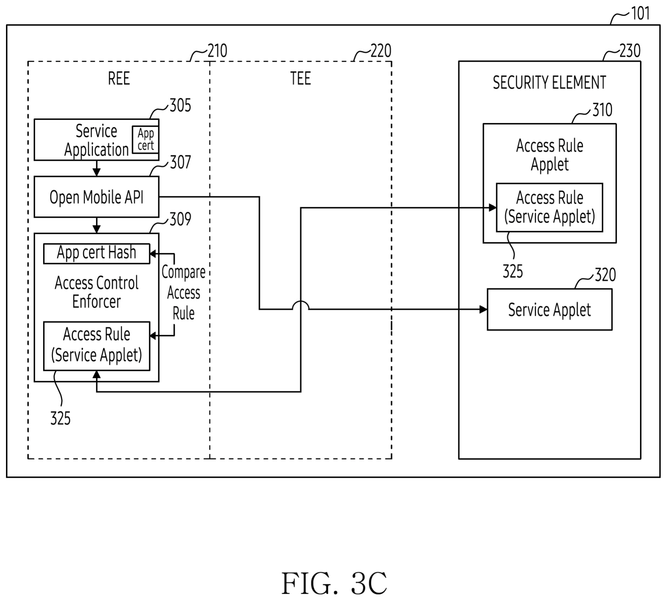

FIG. 3C illustrates an example of a method for performing an access to an applet of a security element.

The applet may include an applet (e.g., the service applet 320 of FIG. 3B) associated with a software application (e.g., the service application 305 of FIG. 3B) that provides a specific service.

An electronic device 101 of FIG. 3C may include at least a portion of the electronic device 101 of FIG. 2. For example, the electronic device 101 of FIG. 3C may include the REE 210, the TEE 220, and the security element 230. The same reference numeral may be used for the same description.

FIG. 3C illustrates an example in which the electronic device 101 executes a specific function by performing an access to the service applet 320. The specific function may include at least one of generation or deletion of a key, generation or verification of a signature, encryption or decryption of data, or storage or deletion of data. For example, through use of the specific function, storage or deletion of data for a transportation card or a credit card, charging of the transportation card, or generation or deletion of a car key may be performed.

Referring to FIG. 3C, for example, the REE 210 may identify an event for executing the function via the service applet 320 by using the service application 305. For example, when the electronic device 101 is booted or when the access rule 325 is updated, the REE 210 may obtain the access rule 325 from the security element 230 via an access control enforcer 309. For example, the REE 210 may obtain the access rule 325 for controlling an access to the service applet 320 from the access rule applet 310. The REE 210 may store the obtained access rule 325 in memory of the REE 210.

For example, the REE 210 may compare the access rule 325 with an access rule calculated based on certification information of the service application 305 by using the access control enforcer 309. The certification information may include a certificate (App cert) of the service application 305 or a hashed value (App cert Hash) of the certificate. For example, when the REE 210, based on the comparison, identifies that the service application 305 is allowed to access the service applet 320, the REE 210 may access the service applet 320 by using an open mobile API 307. Accordingly, the function may be executed.

As described above, when the access control enforcer 309 reads (or obtains) the access rule 325 stored (or cached) in the security element 230, the REE 210 may store the access rule 325 in the memory. Accordingly, the access rule 325 may be easily exposed and tampered with. When the access rule 325 is tampered with to have a desired value before being compared with the access rule calculated based on the certification information, there is a problem that an unauthorized software application may access the service applet 320. Alternatively, even when the comparison by the access control enforcer 309 on the REE 210, which is a relatively open environment, is skipped, there is a problem that an unauthorized software application may access the service applet 320. In addition, the access rule calculated for comparison with the access rule 325 is generated based on a certificate (or a hashed value of the certificate) of an application, and may be used for all security elements. That is, there may be a security risk, as an access rule value exposed from a specific terminal may also be usable on another terminal.

Hereinafter, an electronic device and a method according to an embodiment of the present disclosure may generate an access rule based on identification information of a security element. In addition, the electronic device and the method according to an embodiment of the present disclosure may generate the access rule in a secure environment (e.g., TEE) rather than in a normal environment (e.g., REE). Accordingly, the electronic device and the method according to an embodiment of the present disclosure may control an access to an applet in a more secure manner. Accordingly, the electronic device and the method according to an embodiment of the present disclosure may reduce risk of exposure of the access rule and enhance security.

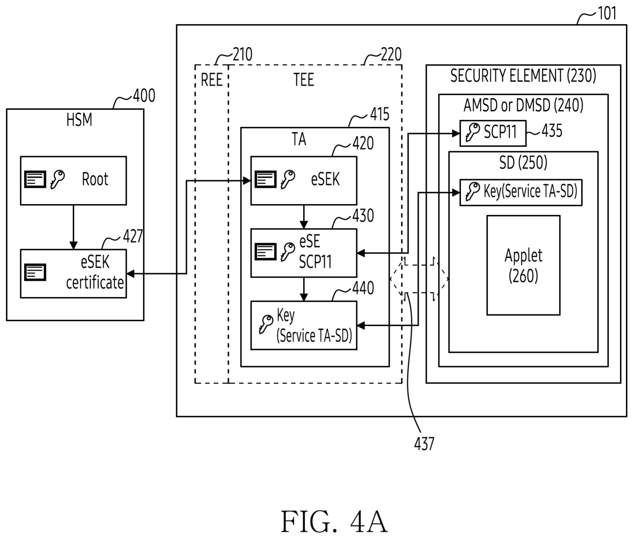

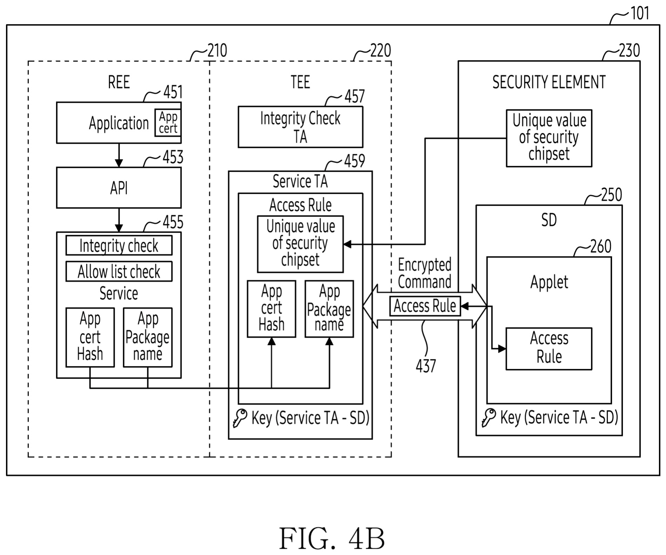

FIGS. 4A and 4B illustrate an example of a method for injecting an access rule based on identification information of a security element in a local region of an electronic device according to an embodiment.

An electronic device 101 of FIG. 4A may include at least a portion of the electronic device 101 of FIG. 2. For example, the electronic device 101 of FIG. 4A may include the REE 210, the TEE 220, and the security element 230 of FIG. 2. The same reference numeral may be used for the same description.

FIG. 4A illustrates an example of a method in which the electronic device 101 injects a shared key (service TA-SD) 440 between a trusted application (TA) 415 and a security domain (SD) 250 in order to inject the access rule in the local region. Injecting the access rule in the local region may be understood as the electronic device 101 injecting the access rule itself. In other words, the electronic device 101 may inject the access rule without a connection to an external electronic device, by using the pre-shared shared key (service TA-SD) 440.

Referring to FIG. 4A, according to an embodiment, the electronic device 101 may include the REE 210, which is a relatively low-security environment, and the TEE 220, which is a relatively high-security environment. For example, the TA 415 inside the TEE 220 may indicate a software application executed in the TEE 220. In addition, as described in FIG. 2, the security element 230 may include an AMSD or DMSD 240 and the SD 250. The AMSD or the DMSD 240 may be referred to as a first security domain. The SD 250 may be referred to as a second security domain, which is a sub-domain of the first security domain. An applet 260 may be stored or installed in the SD 250. As described above, the shared key (service TA-SD) 440 between the TA 415 and the SD 250 may also be referred to as a shared key (service TA-SD) between the TEE 220 and the security element 230.

According to an embodiment, the shared key (service TA-SD) 440 may be required for the electronic device 101 to generate the access rule, which is a value for controlling an access to the applet 260, in the local region. The electronic device 101 needs to operate as an authenticated end-point in order to generate the shared key (service TA-SD) 440 and inject it into the SD 250. In order to operate as the authenticated end-point, the electronic device 101 may obtain a certificate signed by an external electronic device (e.g., a hardware security module (HSM) 400 (or a factory HSM)) at the time of manufacturing the electronic device 101.

Referring to FIG. 4A, the electronic device 101 according to an embodiment may generate a security element key (SEK) 420 for providing a service related to a security element of the electronic device 101 by using the TA 415 of the TEE 220. The security element key 420 may also be referred to as an embedded SEK (eSEK). The security element key 420 may be related to a sub-certificate authority (CA) for providing a service related to the security element of the electronic device 101. The electronic device 101 may generate a certificate signing request (CSR) for generating a signature value for the security element key 420. The electronic device 101 may transmit the security element key 420 and the CSR to the HSM 400, which is an external electronic device used for injecting a key and a certificate in a manufacturing process of the electronic device 101. For example, the TA 415 of the electronic device 101 may transmit the CSR to the HSM 400. The electronic device 101 may request a certificate with respect to the security element key 420 by transmitting the CSR.

According to an embodiment, the HSM 400 may perform a signature by using the CSR and a root key of the security element key 420. The HSM 400 may generate a certificate (hereinafter, a first certificate) 427 with respect to the security element key 420 based on the signature. The security element key 420 may be a key chained with the root key. The HSM 400 may transmit the generated first certificate 427 to the electronic device 101. For example, the HSM 400 may transmit the first certificate 427 to the TA 415 of the electronic device 101.

According to an embodiment, the electronic device 101 may generate a sub-key 430 of the security element key 420 and a certificate (hereinafter, a second certificate) with respect to the sub-key 430. For example, the sub-key 430 may include an eSE SCP11 key. The electronic device 101 may perform a signature for the second certificate by using the security element key 420 authenticated based on the first certificate. For example, the sub-key 430 may be an asymmetric key paired with an SCP11 key 435, which is a key for managing the AMSD or DMSD 240. The sub-key 430 may be a key chained with the security element key 420. In other words, the root key, the security element key 420, and the sub-key 430 may be chained.

According to an embodiment, the electronic device 101 may generate a security channel 437 by using the sub-key 430 and a designated protocol with the AMSD or DMSD 240. For example, the TA 415 and the AMSD or DMSD 240 may calculate a shared secret value for mutual verification by using the sub-key 430 and the SCP11 key 435. For example, the TA 415 may calculate the shared secret value by using the sub-key 430. For example, the AMSD or DMSD 240 may calculate the shared secret value by using the SCP11 key 435. When the calculation of the common shared secret value is a success, the security channel 437 may be generated. The security channel 437 may include a secure session. In addition, the AMSD or DMSD 240 may perform chain verification of the first certificate and the second certificate by using a public key for the root key, based on an SCP11 protocol method.

According to an embodiment, the electronic device 101 may inject the generated shared key (service TA-SD) 440 into the SD 250 by using the security channel 437. For example, the TA 415 may generate the shared key (service TA-SD) 440. The shared key (service TA-SD) 440 may be delivered from the TA 415 to the SD 250 by using the security channel 437. The shared key (service TA-SD) delivered to the SD 250 may be stored in the SD 250. The shared key (service TA-SD) may also be used to activate the security channel 437. For example, the TA 415 may activate the security channel 437 by using the shared key (service TA-SD) and perform communication with the SD 250.

An electronic device 101 of FIG. 4B may include at least a portion of the electronic device 101 of FIG. 2. For example, the electronic device 101 of FIG. 4B may include the REE 210, the TEE 220, and the security element 230. The same reference numeral may be used for the same description.

The electronic device 101 of FIG. 4B may be in a state in which the shared key (service TA-SD) between a TA (hereinafter, service TA) 459 and the SD 250 is shared according to the method of FIG. 4A. In other words, the electronic device 101 of FIG. 4B may indicate an electronic device manufactured in a state in which the shared key (service TA-SD) is stored in the TEE 220 and the security element 230 of the electronic device 101.

Referring to FIG. 4B, the electronic device 101 according to an embodiment may identify an event for an access to an applet 260 based on an application 451 for providing a specific service. For example, the application 451 may include a service application for providing the specific service by using the applet 260. The applet 260 may be referred to as a service applet associated with the service application. For example, the REE 210 may be associated with the software application 451 and may identify whether there is an attempt to access the applet 260 via an application programming interface (API) 453 defined for use of the applet 260. For example, the API 453 may include an open mobile API or a security chip API defined for the security element 230. The access may be an initial access to the applet 260 via the API 453 using the application 451.

According to an embodiment, when the initial access to the applet 260 via the API 453 exists, the electronic device 101 may perform an integrity check of the electronic device 101. For example, the REE 210 may perform the integrity check by using a service module 455. The service module 455 may indicate a module included in the electronic device 101 for use of the security element 230. For example, the integrity check may be performed based on the service module 455 of the REE 210 and a TA (hereinafter, integrity check TA) 457 for an integrity check of the TEE 220. The integrity check of the electronic device 101 may include checking state information of the electronic device 101. For example, the state information of the electronic device 101 may include root of trust (RoT) information. The RoT information may include at least one of a verified boot state, information indicating whether the electronic device 101 is in a locked state, an operating system version (OS version), a patch time point, or a patch level.

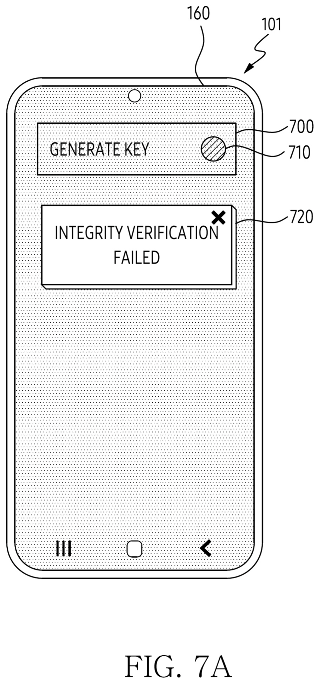

According to an embodiment, when a result of the integrity check is a failure, the electronic device 101 may restrict use of the API 453. The failed result of the integrity check may indicate that there is a problem with the integrity of the electronic device 101. For example, in a case that the electronic device 101 is a rooted terminal or has downloaded abnormal firmware, the electronic device 101 may be identified as having an integrity problem. For example, the electronic device 101 may transmit, to a service provider (e.g., a trusted service manager (TSM)) of the application 451, information to indicate that the result of the integrity check is a failure. In addition, the electronic device 101 may display a visual object to indicate the failure of the integrity verification. For example, the electronic device 101 may display the visual object via a display (e.g., the display module 160 of FIG. 1). A specific detail related to this is described below in FIG. 7A.

According to an embodiment, when a result of the integrity check is a success, the electronic device 101 may perform an allow list check. The successful result of the integrity check may indicate that there is no problem with the integrity of the electronic device 101. For example, in a case that the electronic device 101 has integrity, the REE 210 may perform the allow list check by using the service module 455. The allow list may be obtained from an external electronic device (e.g., a KMS 300). The allow list may include information with respect to at least one software application. For example, the information with respect to the at least one software application may include at least one of certification information of the software application or package information of the software application. For example, the certification information may include a certificate (App cert) of the software application or a hashed value (App cert Hash) of the certificate. For example, the package information may include at least one of a package name (App package name) or an application identifier (AID) of the software application.

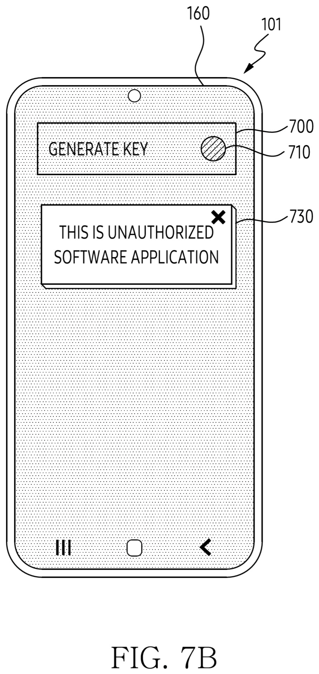

According to an embodiment, when the application 451 is different from the at least one software application of the allow list, the electronic device 101 may display a visual object to indicate that the application 451 is an unauthorized software application. For example, the electronic device 101 may display the visual object via the display (e.g., the display module 160 of FIG. 1) in response to identifying that the application 451 is different from the at least one software application of the allow list. A specific detail related to this is described below in FIG. 7B.

According to an embodiment, when the application 451 is included in the at least one software application of the allow list, the electronic device 101 may deliver package information and certification information of the application 451 from the REE 210 to the TEE 220. For example, the REE 210 may provide the package information and the certification information of the application 451 to the service TA 459 of the TEE 220.

According to an embodiment, the service TA 459, which has received the package information and the certification information of the application 451, may read identification information of the security element 230. For example, the service TA 459 may obtain the identification information from the security element 230. For example, the identification information may include a unique value (unique value of security chip) indicating the security element 230. The TEE 220 may generate a value for controlling an access to the applet 260 based on the package information of the application 451, the certification information of the application 451, and the identification information of the security element 230. For example, the service TA 459 of the TEE 220 may calculate an access rule for the applet 260 based on the package information, the certification information, and the identification information. The access rule may include a hashed value based on the package information, the certification information, and the identification information.

According to an embodiment, the TEE 220 may transmit, to the security element 230, a command for storing the calculated access rule in the security element 230. For example, the service TA 459 may transmit the command including the access rule to the SD 250 by using the security channel 437. For example, the access rule may be included in a header of the command. For example, the command may be encrypted via the shared key (service TA-SD) between the service TA 459 and the SD 250. The security element 230 may decrypt the command by using the shared key (service TA-SD) and may store the access rule. For example, the applet 260 may store the access rule by decrypting the command based on the shared key (service TA-SD).

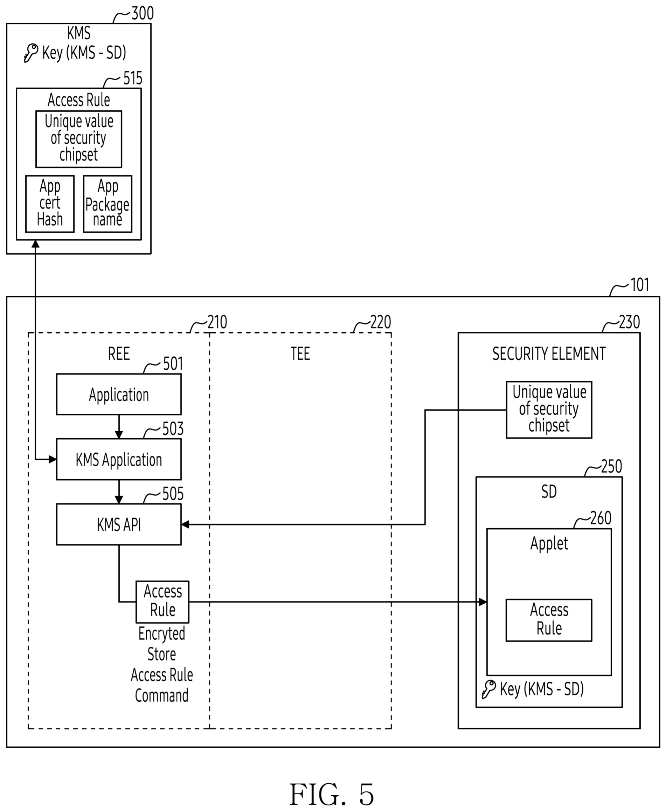

FIG. 5 illustrates an example of a method for injecting an access rule based on identification information of a security element by using an external electronic device according to an embodiment.

An electronic device 101 of FIG. 5 may include at least a portion of the electronic device 101 of FIG. 2. For example, the electronic device 101 of FIG. 5 may include the REE 210, the TEE 220, and the security element 230 of FIG. 2. The same reference numeral may be used for the same description. For example, a KMS 300, which is an external electronic device of FIG. 5 may be understood to be substantially the same as the KMS 300, which is the external electronic device of FIG. 3A.

Referring to FIG. 5, according to an embodiment, the electronic device 101 may be in a state in which a key shared with the KMS 300 is stored. For example, a shared key (KMS-SD) may be stored in an SD 250 of the electronic device 101. The electronic device 101 may connect to the KMS 300 to inject an access rule using the KMS 300. The electronic device 101 may identify a request to inject an access rule for an applet 260 from an application 501 for providing a specific service. For example, the request to inject the access rule may include an initial access to the applet 260 from the application 501. For example, the application 501 may include a service application for providing the specific service by using the applet 260. The applet 260 may be referred to as a service applet associated with the service application.

According to an embodiment, based on the injection request, the electronic device 101 may request the access rule from the KMS 300 by using a KMS application 503 configured to manage the KMS 300. For example, in response to identifying the injection request from the application 501, the REE 210 may notify the KMS application 503 that there is the injection request. For example, the REE 210 may be associated with the KMS application 503, and may obtain identification information (e.g., a unique value (unique value of security chip) of security element 230) of the security element 230 based on a KMS API 505 defined for use of the applet 260. For example, the REE 210 may obtain package information (e.g., a package name (App Package name) or an application identifier (AID)) of the application 501. For example, the REE 210 may transmit the request for the access rule, which includes the package information and the identification information, to the KMS 300 by using the KMS application 503.

According to an embodiment, based on the received request for the access rule, the KMS 300 may identify whether the application 501 is included in at least one application of an allow list. For example, the KMS 300 may identify whether the package information on the application 501 is included in the allow list. In a case that the application 501 is included in the at least one software application of the allow list, the KMS 300 may generate the access rule based on certification information, the package information, and the identification information of the application 501. The certification information of the application 501 may already be registered in the KMS 300. For example, the certification information may include a certificate of the application 501 or a hashed value (App cert Hash) of the certificate. For example, the KMS 300 may calculate the access rule by hashing based on the certification information, the package information, and the identification information. The access rule may be referred to as a value for controlling an access to the applet 260. The KMS 300 may transmit the calculated access rule to the electronic device 101. For example, the KMS 300 may transmit a command, which is encrypted using the shared key (KMS-SD) and includes the access rule, to the REE 210. The command may be a command for storing the access rule in the applet 260.

According to an embodiment, the electronic device 101 may deliver the received command to the security element 230. For example, the REE 210 may deliver the command to the security element 230 by using the KMS API 505, which is called using the KMS application 503. The security element 230 may decrypt the command by using the shared key (KMS-SD) and may store the access rule. For example, the applet 260 may store the access rule by decrypting the command based on the shared key (KMS-SD).

Referring to FIGS. 4A to 5, the electronic device 101 may store an access rule, which is a value for controlling an access to the applet 260, in the applet 260. For example, the electronic device 101 of FIGS. 4A and 4B may generate an access rule in a local region (e.g., the TEE 220) of the electronic device 101 by using a shared key (service TA-SD), and may inject the access rule into the applet 260. Alternatively, the electronic device 101 of FIG. 5 may obtain an access rule generated by an external electronic device (e.g., the KMS 300) connected via a network, by using a shared key (KMS-SD), and may inject the access rule into the applet 260. The access rule injected (or stored) in the applet 260 may be used to control an access to the applet 260 when an access attempt is made via the service application. In other words, the access rule may be a value for controlling an access to the applet 260.

In FIGS. 4A to 5, for convenience of explanation, the applet 260 that stores one access rule for one service application is described by way of example, but an embodiment of the present disclosure is not limited thereto. For example, an access rule for each of a plurality of service applications may be stored in the applet 260. Alternatively, the security element 230 may also include a plurality of applets.

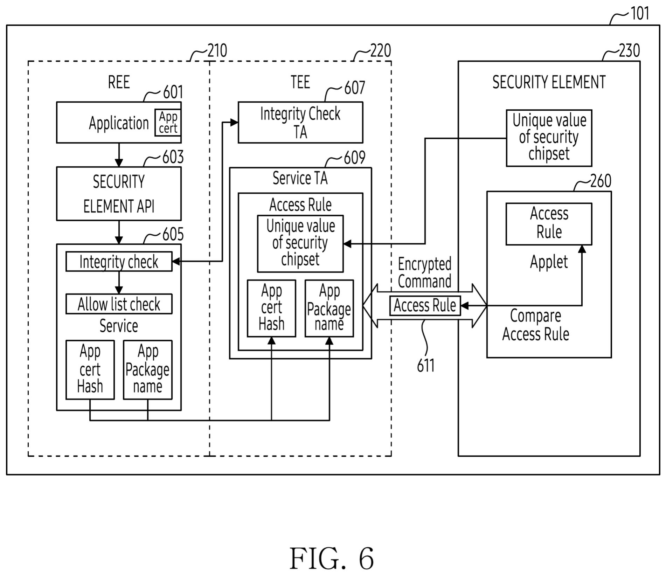

Hereinafter, in FIG. 6, an example is described for a method in which the electronic device 101 executes a function of the applet 260 by calculating an access rule for an access to the applet 260 in a secure environment (e.g., the TEE 220) and comparing it with the stored access rule.

FIG. 6 illustrates an example of a method for performing an access to an applet by using an access rule based on identification information of a security element according to an embodiment.

An electronic device 101 of FIG. 6may include at least a portion of the electronic device 101 of FIG. 2. For example, the electronic device 101 of FIG. 6 may include the REE 210, the TEE 220, and the security element 230 of FIG. 2. The same reference numeral may be used for the same description.

The electronic device 101 of FIG. 6may be in a state in which an access rule is stored inside an applet 260 of the security element 230, according to the method of FIGS. 4A and 4B or FIG. 5.

Referring to FIG. 6, according to an embodiment, the electronic device 101 may identify an event for an access to the applet 260 based on an application 601 for providing a specific service. For example, the application 601 may include a service application for providing the specific service by using the applet 260. The applet 260 may be referred to as a service applet associated with the service application. For example, the REE 210 may be associated with the software application 601 and may identify whether there is an attempt to access the applet 260 via an application programming interface (API) 603 defined for use of the applet 260. For example, the API 603 may include an open mobile API or a security chip API defined for the security element 230. The access may be a non-initial access to the applet 260 via the API 603 using the application 601. In other words, the access rule related to the application 601 may have already been stored in the applet 260. For example, identifying whether the access attempt exists may indicate identifying, based on the application 601, an event for executing a function of the applet 260 in the security element 230. The function may include at least one of generation or deletion of a key, generation or verification of a signature, encryption or decryption of data, or storage or deletion of data. For example, through use of the function, storage or deletion of data for a transportation card or a credit card, charging of the transportation card, or generation or deletion of a car key may be performed.

According to an embodiment, the electronic device 101 may perform an integrity check of the electronic device 101 in response to identifying the access to the applet 260 via the API 603. For example, the REE 210 may perform the integrity check by using a service module 605. The service module 605 may indicate a module included in the electronic device 101 for use of the security element 230. For example, the integrity check may be performed based on the service module 605 of the REE 210 and a TA (hereinafter, integrity check TA) 607 for an integrity check of the TEE 220. The integrity check of the electronic device 101 may include checking state information of the electronic device 101. For example, the state information of the electronic device 101 may include root of trust (RoT) information. The RoT information may include at least one of a verified boot state, information indicating whether the electronic device 101 is in a locked state, an operating system version (OS version), a patch time point, or a patch level.

According to an embodiment, when a result of the integrity check is a failure, the electronic device 101 may restrict use of the API 603. The failed result of the integrity check may indicate that there is a problem with the integrity of the electronic device 101. For example, in a case that the electronic device 101 is a rooted terminal or has downloaded abnormal firmware, the electronic device 101 may be identified as having an integrity problem. For example, in a case that the electronic device 101 is a rooted terminal and attempts to execute a specific function (e.g., a signature for specific data) by using a key generated inside the security element 230, a command for executing the specific function on the security element 230 may not be transmitted according to a failure of the integrity check. The electronic device 101 may transmit, to a service provider (e.g., a TSM) of the application 601, information to indicate that the result of the integrity check is a failure. In addition, the electronic device 101 may display a visual object to indicate the failure of the integrity verification. For example, the electronic device 101 may display the visual object via a display (e.g., the display module 160 of FIG. 1). A specific detail related to this is described below in FIG. 7A.

According to an embodiment, when a result of the integrity check is a success, the electronic device 101 may perform an allow list check. The successful result of the integrity check may indicate that there is no problem with the integrity of the electronic device 101. For example, in a case that the electronic device 101 has integrity, the REE 210 may perform the allow list check by using the service module 605. The allow list may be obtained from an external electronic device (e.g., a KMS 300). The allow list may include information with respect to at least one software application. For example, the information with respect to the at least one software application may include at least one of certification information of the software application or package information of the software application. For example, the certification information may include a certificate (App cert) of the software application or a hashed value (App cert Hash) of the certificate. For example, the package information may include at least one of a package name (App Package name) or an application identifier (AID) of the software application.

According to an embodiment, in a case that the application 601 is different from the at least one software application of the allow list, the electronic device 101 may display a visual object to indicate that the application 601 is an unauthorized software application. For example, the electronic device 101 may display the visual object via the display (e.g., the display module 160 of FIG. 1) in response to identifying that the application 601 is different from the at least one software application of the allow list. A specific detail related to this is described below in FIG. 7B.

According to an embodiment, in a case that the application 601 is included in the at least one software application of the allow list, the electronic device 101 may deliver package information and certification information of the application 601 from the REE 210 to the TEE 220. For example, the REE 210 may provide the package information and the certification information of the application 601 to a service TA 609 of the TEE 220.

According to an embodiment, the service TA 609, which has been provided with the package information and the certification information of the application 601, may read identification information of the security element 230. For example, the service TA 609 may obtain the identification information from the security element 230. Alternatively, for example, the service TA 609 may encrypt the identification information obtained from the security element 230 and store it in memory of the REE 210, and, when necessary, may obtain and decrypt the identification information from the memory for reuse. The term 'when necessary' may include a case in which the TEE 220 is provided with the package information and the certification information from the REE 210 to calculate the following access rule. For example, the identification information may include a unique value indicating the security element 230. The TEE 220 may generate a value for controlling an access to the applet 260 based on the package information of the application 601, the certification information of the application 601, and the identification information of the security element 230. For example, the service TA 609 of the TEE 220 may calculate an access rule for the applet 260 based on the package information, the certification information, and the identification information. The calculated access rule may include a hashed value based on the package information, the certification information, and the identification information.

According to an embodiment, the TEE 220 may transmit the calculated access rule to the security element 230 via a command for executing the function by using the applet 260 in the security element 230. For example, the service TA 609 may transmit the command including the calculated access rule to an SD 250 by using a security channel 611. For example, the calculated access rule may be included in a header of the command. For example, the command may be encrypted via a shared key (service TA-SD) between the service TA 609 and the SD 250. The shared key (service TA-SD) may be pre-injected (or pre-stored) at the time of manufacturing the electronic device 101. The security element 230 may decrypt the command by using the shared key (service TA-SD) and may obtain the calculated access rule. For example, the applet 260 may identify the calculated access rule by decrypting the command based on the shared key (service TA-SD). The applet 260 may compare the calculated access rule with the stored access rule. For example, when the calculated access rule corresponds to the stored access rule, the applet 260 may execute the function according to the command. The applet 260 executing the function according to the command may include performing an operation according to the function requested by the authorized application 601 via the API 603. In contrast, when the calculated access rule does not correspond to the stored access rule, the applet 260 may ignore the command. In other words, when the calculated rule is different from the stored access rule, the applet 260 may terminate the operation without executing the command.

As described above, in a device and a method according to an embodiment of the present disclosure, an access rule, which is a value for an access to an applet, may be calculated inside a service TA (e.g., the service TA 609) of a secure environment (e.g., the TEE 220). Accordingly, since the value is not exposed to a normal environment (e.g., the REE 210), the device and the method according to an embodiment of the present disclosure may prevent an access to an applet of an unauthorized application in the normal environment via forgery or tampering of an access rule.

In addition, the device and the method according to an embodiment of the present disclosure may, when delivering an access rule from the service TA to a security element (e.g., the security element 230), deliver it via a command encrypted with a pre-shared key between the service TA and the security element. The command may include the access rule in its header. Accordingly, in the device and the method according to an embodiment of the present disclosure, risk of the access rule being exposed on a communication channel between the service TA (or the TEE) and the security element may be reduced.

In addition, unlike an access rule configured with a hashed value (App cert Hash) of a certificate of an application, which has the same value regardless of the security element, the device and the method according to an embodiment of the present disclosure may calculate an access rule by using certification information (e.g., a certificate or a hashed certificate value), package information (e.g., a package name), and identification information of the security element (e.g., a unique value (unique value of security chipset) of the security element). Accordingly, different access rules are calculated for each security element even for the same application, such that an access to an applet of an electronic device may be impossible via reuse of an access rule obtained from another electronic device.

In addition, when an access rule calculated in the REE is compared with a stored access rule, there may be a possibility of an access to an applet of an unauthorized application by bypassing logic for the comparison. In contrast, the device and the method according to an embodiment of the present disclosure may perform the comparison between the calculated access rule and the stored access rule in a security element. Accordingly, the device and the method according to an embodiment of the present disclosure may prevent an access to the applet via bypassing the logic for the comparison of the access rule, by using hardware-level security (H/W security level).

FIG. 7A illustrates an example of a visual object displayed according to a result of an integrity check of an electronic device according to an embodiment. FIG. 7B illustrates an example of a visual object displayed according to a result of an allow list check of a software application according to an embodiment.

An electronic device 101 of FIGS. 7A and 7B may include at least a portion of the electronic device 101 of FIG. 2. For example, the electronic device 101 of FIGS. 7A and 7B may perform an operation based on the REE 210, the TEE 220, and the security element 230 of FIG. 2. For example, a display 160 of FIGS. 7A and 7B may include at least a portion of the display module 160 of the electronic device 101 of FIG. 1. The same reference numeral may be used for the same description.

Referring to FIGS. 7A and 7B, according to an embodiment, the electronic device 101 may display a user interface of a service application via a screen of the display 160. For example, the service application may include the application 451 of FIG. 4B, the application 501 of FIG. 5, or the application 601 of FIG. 6. For example, the user interface may include a visual object 700 for generating a car key via the service application. For example, the service application of FIGS. 7A and 7B may indicate a service application capable of providing a function for managing a car key. However, an embodiment of the present disclosure is not limited thereto. The electronic device 101 may identify an input 710 to the visual object 700. For example, the input 710 may include a touch input on the screen by a user of the electronic device 101. Accordingly, the electronic device 101 may identify that there is an attempt to access an applet related to the service application, based on the service application, in order to execute the function. Identifying whether the access attempt exists may indicate identifying, based on the service application, an event for executing the function of the applet in the security element.

Referring to FIG. 7A, according to an embodiment, the electronic device 101 may display a visual object 720 to indicate a failure of integrity verification. For example, the visual object 720 may indicate a notification including the text, "Integrity verification failed."

For example, the electronic device 101 may perform an integrity check of the electronic device 101 in response to identifying the access to the applet via an API called using the service application. For example, the electronic device 101 may perform the integrity check by using a service module (e.g., the service module 605 of FIG. 6) in an REE related to the service application. For example, the electronic device 101 may perform the integrity check of the electronic device 101 by using an integrity check TA (e.g., the integrity check TA 607 of FIG. 6) of a TEE, based on the service module. The integrity check of the electronic device 101 may include checking state information of the electronic device 101. For example, the state information of the electronic device 101 may include root of trust (RoT) information. The RoT information may include at least one of a verified boot state, information indicating whether the electronic device 101 is in a locked state, an operating system version (OS version), a patch time point, or a patch level. In a case that a result of the integrity check is a failure, the electronic device 101 may restrict use of the API. The failed result of the integrity check may indicate that there is a problem with the integrity of the electronic device 101. For example, when the electronic device 101 is a rooted terminal or has downloaded abnormal firmware, the electronic device 101 may be identified as having an integrity problem. For example, in a case that the electronic device 101 is a rooted terminal and attempts to execute a specific function (e.g., a signature for specific data) by using a key generated inside the security element, a command for executing the specific function on the security element may not be transmitted according to a failure of the integrity check. For example, the electronic device 101 may transmit, to a service provider (e.g., TSM) of the service application, information to indicate that the result of the integrity check is a failure. For example, the electronic device 101 may display the visual object 720 on the screen of the display 160 to notify the user of the failure of the integrity check.

Referring to FIG. 7B, the electronic device 101 may display a visual object 730 to indicate an unauthorized application. For example, the visual object 730 may indicate a notification including the text, "This is an unauthorized application."

According to an embodiment, when a result of the integrity check is a success, the electronic device 101 may perform an allow list check. The successful result of the integrity check may indicate that there is no problem with the integrity of the electronic device 101. For example, in a case that the electronic device 101 has integrity, an REE (e.g., the REE 210) of the electronic device 101 may perform the allow list check by using a service module (e.g., the service module 605 of FIG. 6). The allow list may be obtained from an external electronic device (e.g., a KMS 300). The allow list may include information with respect to at least one software application. For example, the information with respect to the at least one software application may include at least one of certification information of the software application or package information of the software application.

According to an embodiment, when the service application is different from the at least one software application of the allow list, the electronic device 101 may display the visual object 730 to notify the user that the service application is an unauthorized software application. For example, the electronic device 101 may display the visual object 730 via the display 160 in response to identifying that the application is different from the at least one software application of the allow list.

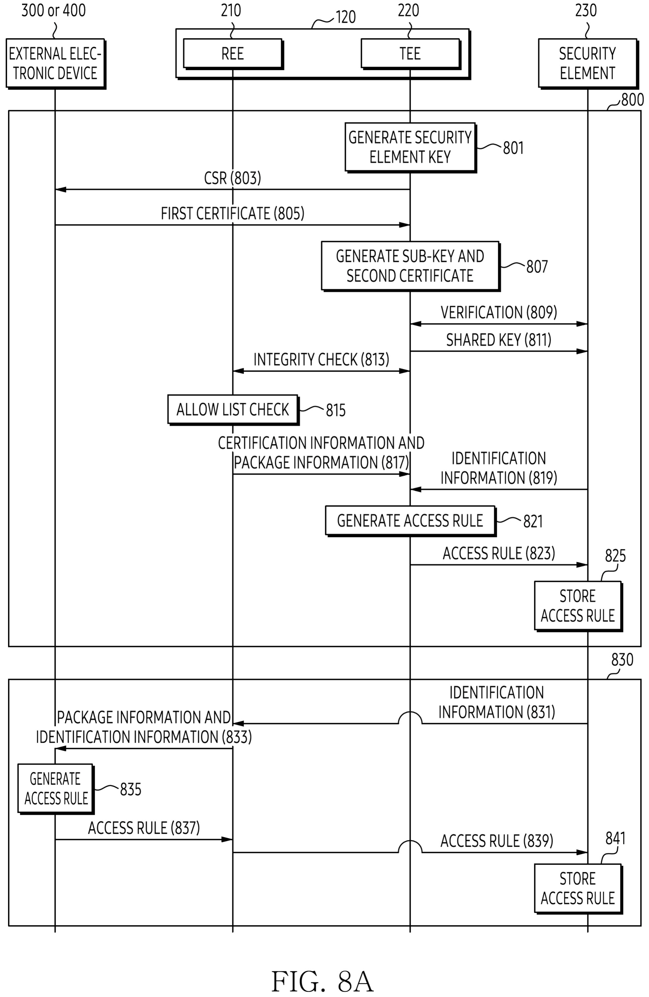

FIG. 8A illustrates an example of an operation flow for injecting an access rule based on identification information of a security element according to an embodiment.

A processor 120 of FIG. 8A may include at least a portion of the processor 120 of FIG. 2. For example, the processor 120 may include an REE 210 and a TEE 220. A security element (SE) 230 of FIG. 8A may include at least a portion of the security element 230 of FIG. 2. The processor 120 and the security element 230 of FIG. 8A may be included in the electronic device 101 of FIG. 2. An external electronic device 300 or 400 of FIG. 8A may include the KMS 300 of FIG. 3A, the HSM 400 of FIG. 4A, and the KMS 500 of FIG. 5.

FIG. 8A illustrates examples 800 and 830 of a method for injecting an access rule into an applet of the security element 230. The example 800 illustrates a method in which the electronic device 101 injects the access rule by using the local region, as illustrated in FIGS. 4A and 4B. In the example 800, the external electronic device 300 or 400 may be the HSM 400. The example 830 illustrates a method in which the electronic device 101 injects the access rule by using the external electronic device 300 or 400, as illustrated in FIG. 5. In the example 830, the external electronic device 300 or 400 may be the KSM 300.

Referring to the example 800, in operation 801, the processor 120 may generate a security element key (SEK) for providing a service related to the security element 230 of the electronic device 101. For example, the TEE 220 may generate the security element key by using a TA. The security element key may also be referred to as an embedded SEK (eSEK). The security element key may be related to a sub-certificate authority (CA) for providing a service related to the security element 230 of the electronic device 101. In addition, the processor 120 may generate a certificate signing request (CSR) for generating a signature value for the security element key. For example, the TEE 220 may generate the CSR by using the TA.

In operation 803, the processor 120 may transmit the CSR to the HSM 400, which is an external electronic device used for injecting a key and a certificate in a manufacturing process of the electronic device 101. For example, the TEE 220 may transmit the CSR to the HSM 400 by using the TA. The electronic device 101 may request a certificate with respect to the security element key by transmitting the CSR.

In operation 805, the HSM 400 may transmit the first certificate to the electronic device 101. For example, the HSM 400 may perform a signature by using the CSR and a root key of the security element key. The HSM 400 may generate the first certificate with respect to the security element key based on the signature. The security element key may be a key chained with the root key. Accordingly, the HSM 400 may transmit the first certificate to the TEE 220 (or the TA of the TEE 220) of the electronic device 101.

In operation 807, the processor 120 may generate a sub-key of the security element key and a second certificate with respect to the sub-key. For example, the TEE 220 may generate the sub-key and the second certificate by using the TA. For example, the sub-key may include an eSE SCP11 key. The electronic device 101 may perform a signature for the second certificate by using the security element key authenticated based on the first certificate. For example, the sub-key may be an asymmetric key paired with an SCP11 key, which is a key for managing a sub-domain (e.g., the AMSD or DMSD 240 of FIG. 2) of the security element 230. The sub-key may be a key chained with the security element key. In other words, the root key, the security element key, and the sub-key may be chained.

In operation 809, the processor 120 may perform verification with the security element 230. For example, the TA of the TEE 220 and the sub-domain (e.g., the AMSD or DMSD 240 of FIG. 2) may calculate a shared secret value for mutual verification by using the sub-key and the SCP11 key. For example, the TA may calculate the shared secret value by using the sub-key. For example, the AMSD or DMSD 240 may calculate the shared secret value by using the SCP11 key. When the calculation of the common shared secret value is a success, a security channel may be generated. The security channel may include a secure session. In addition, the AMSD or DMSD 240 may perform chain verification of the first certificate and the second certificate by using a public key for the root key, based on an SCP11 protocol method.

In operation 811, the processor 120 may inject a shared key (service TA-SD) into a sub-domain (e.g., the SD 250 of FIG. 2) of the security element 230 by using the security channel. For example, the TEE 220 may generate the shared key (service TA-SD) by using the TA. The shared key (service TA-SD) may be delivered from the TEE 220 to the security element 230. For example, the shared key (service TA-SD) may be delivered from the TA to the SD 250. The shared key (service TA-SD) delivered to the SD 250 may be stored in the SD 250. The shared key (service TA-SD) may also be used to activate the security channel. For example, the TA may activate the security channel by using the shared key (service TA-SD) and perform communication with the SD 250.

Before operation 813 is performed, the electronic device 101 may identify an event for an access to the applet 260 of FIG. 2 based on a service application for providing a specific service. For example, the service application may include an application for providing the specific service by using the applet. The applet may be referred to as a service applet associated with the service application. For example, the REE 210 may be associated with the service application and may identify whether there is an attempt to access the service applet via an application programming interface (API) defined for use of the service applet. For example, the API may include an open mobile API or a security chip API defined for the security element 230. The access may be an initial access to the service applet via the API using the service application.

In operation 813, the processor 120 may perform an integrity check. For example, the integrity check may be performed based on a service module (e.g., the service module 455 of FIG. 4B) of the REE 210 and a TA (e.g., the integrity check TA 457 of FIG. 4B) for an integrity check of the TEE 220. For example, when the initial access to the service applet via the API exists, the processor 120 may perform an integrity check of the electronic device 101. For example, the REE 210 may perform the integrity check by using the service module. The service module 455 may indicate a module included in the electronic device 101 for use of the security element 230. The integrity check of the electronic device 101 may include checking state information of the electronic device 101. For example, the state information of the electronic device 101 may include root of trust (RoT) information. The RoT information may include at least one of a verified boot state, information indicating whether the electronic device 101 is in a locked state, an operating system version (OS version), a patch time point, or a patch level.

In a case that a result of the integrity check according to the operation 813 is a failure, the processor 120 may restrict use of the API. The failed result of the integrity check may indicate that there is a problem with the integrity of the electronic device 101. For example, in a case that the electronic device 101 is a rooted terminal or has downloaded abnormal firmware, the electronic device 101 may be identified as having an integrity problem. For example, the electronic device 101 may transmit, to a service provider (e.g., TSM) of the service application, information to indicate that the result of the integrity check is a failure. In addition, the electronic device 101 may display a visual object (e.g., the visual object 730 of FIG. 7A) to indicate the failure of the integrity check.

In a case that a result of the integrity check according to the operation 813 is a success, in operation 815, the processor 120 may perform an allow list check. For example, the REE 210 may check whether the service application is included in the allow list. The successful result of the integrity check may indicate that there is no problem with the integrity of the electronic device 101. For example, in a case that the electronic device 101 has integrity, the REE 210 may perform the allow list check by using the service module. The allow list may be obtained from an external electronic device (e.g., the KMS 300). The allow list may include information with respect to at least one software application. For example, the information with respect to the at least one software application may include at least one of certification information of the software application or package information of the software application. For example, the certification information may include a certificate of the software application or a hashed value of the certificate. For example, the package information may include at least one of a package name or an application identifier (AID) of the software application.

In a case that the service application is different from the at least one software application of the allow list, the processor 120 may display a visual object (e.g., the visual object 730 of FIG. 7B) to indicate that the service application is an unauthorized software application.

In operation 815, the processor 120 may deliver certification information and package information from the REE 210 to the TEE 220. For example, when the service application is included in the at least one software application of the allow list, the REE 210 may deliver the certification information and the package information to the TEE 220. For example, the REE 210 may provide the package information and the certification information to a service TA of the TEE 220.

In operation 819, the processor 120 may obtain identification information from the security element 230. For example, the TEE 220 may obtain the identification information. For example, the identification information may include a unique value indicating the security element 230. For example, the TEE 220 may obtain the identification information from the security element 230 by using the service TA. Alternatively, for example, by using the service TA, the TEE 220 may encrypt the identification information obtained from the security element 230 and store it in memory of the REE 210, and, when necessary, may obtain and decrypt the identification information from the memory for reuse. The term 'when necessary' may include a case in which the TEE 220 is provided with the package information and the certification information from the REE 210 to calculate the following access rule. However, an embodiment of the present disclosure is not limited thereto. For example, in FIG. 8A, the operation 819 is illustrated as being performed after the operation 817, but the operation 819 may be performed simultaneously or before the operation 817.

In operation 821, the processor 120 may generate an access rule. For example, the TEE 220 may generate a value for controlling an access to the service applet based on the package information, the certification information, and the identification information of the security element 230. For example, the service TA of the TEE 220 may calculate an access rule for the service applet based on the package information, the certification information, and the identification information. The calculated access rule may include a hashed value based on the package information, the certification information, and the identification information.

In operation 823, the processor 120 may transmit the calculated access rule to the security element 230. For example, the TEE 220 may transmit, to the security element 230, a command for storing the calculated access rule in the security element 230. For example, the TEE 220 may transmit, via a security channel, the command including the access rule to a sub-domain (e.g., the SD 250 of FIG. 2) of the security element 230, by using the service TA. For example, the access rule may be included in a header of the command. For example, the command may be encrypted via the shared key (service TA-SD) between the service TA and the SD 250.

In operation 825, the security element 230 may store the access rule. For example, the applet 260 may store the access rule by decrypting the command based on the shared key (service TA-SD).

Referring to the example 830, the electronic device 101 may be in a state in which a key shared with the KMS 300 is stored. For example, a shared key (KMS-SD) may be stored in a sub-domain (e.g., the SD 250 of FIG. 2) of the security element 230 of the electronic device 101.

Before operation 831 is performed, the electronic device 101 may connect to the KMS 300 to inject an access rule using the KMS 300. The electronic device 101 may identify a request to inject an access rule for a service applet from a service application for providing a specific service. For example, the request to inject the access rule may include an initial access to the service applet from the service application.

In operation 831, the processor 120 may obtain identification information from the security element 230. For example, in response to identifying the injection request from the service application, the REE 210 may notify a KMS application that there is the injection request. For example, the REE 210 may be associated with the KMS application, and may obtain the identification information of the security element 230 based on a KMS API defined for use of the service applet. In addition, the REE 210 may obtain package information of the service application.

In operation 833, the processor 120 may transmit package information and identification information to the KMS 300. For example, the REE 210 may transmit the request for the access rule, which includes the package information and the identification information, to the KMS 300 by using the KMS application 503 of FIG. 5.

In operation 835, the KMS 300 may generate the access rule. For example, based on the received request for the access rule, the KMS 300 may identify whether the service application is included in at least one application of an allow list. For example, the KMS 300 may identify whether the package information on the service application is included in the allow list. In a case that the service application is included in the at least one software application of the allow list, the KMS 300 may generate the access rule based on certification information of the service application, the package information, and the identification information. The certification information of the service application may already be registered in the KMS 300. For example, the certification information may include a certificate of the service application or a hashed value of the certificate. For example, the KMS 300 may calculate the access rule by hashing based on the certification information, the package information, and the identification information. The access rule may be referred to as a value for controlling an access to the service applet.

In operation 837, the KMS 300 may transmit the calculated access rule to the processor 120. For example, the KMS 300 may transmit a command, which is encrypted using the shared key (KMS-SD) and includes the access rule, to the REE 210. The command may be a command for storing the access rule in the service applet.

In operation 839, the processor 120 may transmit an access rule to the security element 230. For example, the REE 210 may deliver the command to the security element 230 by using the KMS API, which is called using the KMS application.

In operation 841, the security element 230 may store the access rule. For example, the service applet may store the access rule by decrypting the command based on the shared key (KMS-SD).

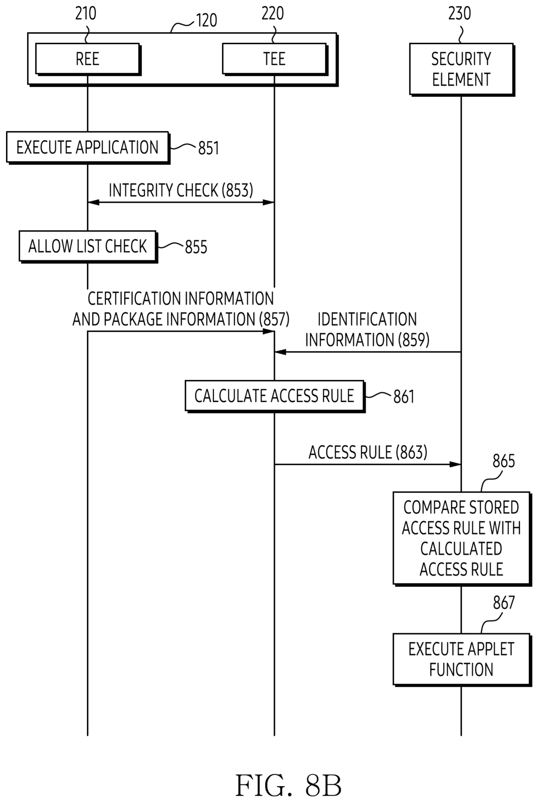

FIG. 8B illustrates an example of an operation flow for performing an access to an applet by using an access rule based on identification information of a security element according to an embodiment.

A processor 120 of FIG. 8B may include at least a portion of the processor 120 of FIG. 2. For example, the processor 120 may include an REE 210 and a TEE 220. A security element (SE) 230 of FIG. 8B may include at least a portion of the security element 230 of FIG. 2. The processor 120 and the security element 230 of FIG. 8B may be included in the electronic device 101 of FIG. 2.

FIG. 8B illustrates an example of a method for performing an access to an applet and executing a function by using an access rule calculated in the TEE 220. An electronic device 101 of FIG. 8B may be in a state in which an access rule stored inside a service applet of the security element 230, according to the examples 800 and 830 of FIG. 8A.

Referring to FIG. 8B, in operation 851, the processor 120 may execute an application. For example, the application may be referred to as a service application for providing a specific service. For example, the REE 210 may identify an event for an access to the service applet based on the service application. For example, the REE 210 may be associated with the service application and may identify whether there is an attempt to access the service applet via an application programming interface (API) defined for use of the service applet. For example, the API may include an open mobile API or a security chip API defined for the security element 230. The access may be a non-initial access to the service applet via the API using the service application. In other words, the access rule related to the service application may have already been stored in the service applet. For example, identifying whether the access attempt exists may indicate identifying, based on the service application, an event for executing a function of the service applet in the security element 230. The function may include at least one of generation or deletion of a key, generation or verification of a signature, encryption or decryption of data, or storage or deletion of data. For example, through use of the function, storage or deletion of data for a transportation card or a credit card, charging of the transportation card, or generation or deletion of a car key may be performed.

In operation 853, the processor 120 may perform an integrity check. For example, the processor 120 may perform the integrity check in response to identifying the access to the service applet via the API. For example, the integrity check may be performed based on a service module of the REE 210 and an integrity check TA of the TEE 220. For example, the service module may include the service module 605 of FIG. 6. For example, the integrity check TA may include the integrity check TA 607 of FIG. 6. An integrity check of the electronic device 101 may include checking state information of the electronic device 101. For example, the state information of the electronic device 101 may include root of trust (RoT) information. The RoT information may include at least one of a verified boot state, information indicating whether the electronic device 101 is in a locked state, an operating system version (OS version), a patch time point, or a patch level.

In a case that a result of the integrity check according to the operation 853 is a failure, the processor 120 may restrict use of the API. The failed result of the integrity check may indicate that there is a problem with the integrity of the electronic device 101. For example, in a case that the electronic device 101 is a rooted terminal or has downloaded abnormal firmware, the electronic device 101 may be identified as having an integrity problem. For example, the electronic device 101 may transmit, to a service provider (e.g., TSM) of the service application, information to indicate that the result of the integrity check is a failure. In addition, the electronic device 101 may display a visual object (e.g., the visual object 730 of FIG. 7A) to indicate the failure of the integrity check.

In a case that a result of the integrity check according to the operation 853 is a success, in operation 855, the processor 120 may perform an allow list check. For example, the REE 210 may check whether the service application is included in the allow list. The successful result of the integrity check may indicate that there is no problem with the integrity of the electronic device 101. For example, in a case that the electronic device 101 has integrity, the REE 210 may perform the allow list check by using the service module. The allow list may be obtained from an external electronic device (e.g., the KMS 300). The allow list may include information with respect to at least one software application. For example, the information with respect to the at least one software application may include at least one of certification information of the software application or package information of the software application. For example, the certification information may include a certificate of the software application or a hashed value of the certificate. For example, the package information may include at least one of a package name or an application identifier (AID) of the software application.

In a case that the service application is different from the at least one software application of the allow list, the processor 120 may display a visual object (e.g., the visual object 730 of FIG. 7B) to indicate that the service application is an unauthorized software application.

In operation 857, the processor 120 may deliver certification information and package information from the REE 210 to the TEE 220. For example, in a case that the service application is included in the at least one software application of the allow list, the REE 210 may deliver the certification information and the package information to the TEE 220. For example, the REE 210 may provide the package information and the certification information to a service TA of the TEE 220.

In operation 859, the processor 120 may obtain identification information from the security element 230. For example, the TEE 220 may obtain the identification information. For example, the identification information may include a unique value indicating the security element 230. For example, the TEE 220 may obtain the identification information from the security element 230 by using the service TA. Alternatively, for example, by using the service TA, the TEE 220 may encrypt the identification information obtained from the security element 230 and store it in memory of the REE 210, and, when necessary, may obtain and decrypt the identification information from the memory for reuse. The term 'when necessary' may include a case in which the TEE 220 is provided with the package information and the certification information from the REE 210 to calculate the following access rule. However, an embodiment of the present disclosure is not limited thereto. For example, in FIG. 8B, the operation 859 is illustrated as being performed after the operation 857, but the operation 859 may be performed simultaneously or before the operation 857.

In operation 861, the processor 120 may generate an access rule. For example, the TEE 220 may generate a value for controlling an access to the service applet based on the package information, the certification information, and the identification information. For example, the service TA of the TEE 220 may calculate an access rule for the service applet based on the package information, the certification information, and the identification information. The calculated access rule may include a hashed value based on the package information, the certification information, and the identification information.

In operation 863, the processor 120 may transmit the calculated access rule to the security element 230. For example, the TEE 220 may transmit, to the security element 230, a command for storing the calculated access rule in the security element 230. For example, the TEE 220 may transmit, via a security channel, the command including the access rule to a sub-domain (e.g., the SD 250 of FIG. 2) of the security element 230, by using the service TA. For example, the access rule may be included in a header of the command. For example, the command may be encrypted via the shared key (service TA-SD) between the service TA and the SD 250. The shared key (service TA-SD) may be pre-injected (or pre-stored) at the time of manufacturing of the electronic device 101.

In operation 865, the security element 230 may compare a stored access rule with a calculated access rule. For example, the service applet may identify the calculated access rule by decrypting the command based on the shared key (service TA-SD). The service applet may compare the calculated access rule with the stored access rule.

In operation 867, the security element 230 may execute a function of an applet. For example, when the calculated access rule corresponds to the stored access rule, the service applet may execute the function according to the command. The service applet executing the function according to the command may include performing an operation according to the function requested by the authorized service application via the API. In contrast, when the calculated access rule does not correspond to the stored access rule, the service applet may ignore the command. In other words, when the calculated rule is different from the stored access rule, the service applet may terminate the operation without executing the command.

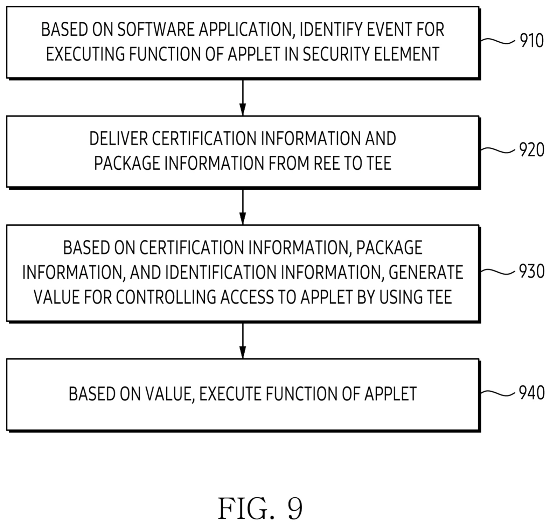

FIG. 9 illustrates an example of a flowchart for a method for controlling an access to an applet of a security element according to an embodiment.

A method of FIG. 9 may be performed by the electronic device 101 of FIG. 2. For example, the method may be performed by the processor 120 and the security element 230 of FIG. 2. For example, the method may be controlled by the processor 120 of FIG. 2. For example, the processor 120 may include an REE 210 and a TEE 220.

In the following embodiment, each operation may be performed sequentially, but they are not necessarily performed sequentially. For example, the order of each of the operations may be changed, and at least two operations may be performed in parallel.

Referring to FIG. 9, in operation 910, the processor 120 may identify an event for executing a function of an applet in the security element 230 based on a software application. For example, the software application may include a software application for providing a specific service. For example, the software application may include the application 451 of FIG. 4B, the application 501 of FIG. 5, or the application 501 of FIG. 6. The software application may be referred to as a service application. The applet may be referred to as a service applet associated with the service application.

According to an embodiment, the REE 210 in the processor 120 may identify an event for executing a function of the applet based on the software application. For example, the event may be identified based on an input to the electronic device 101. For example, identifying the event may include identifying whether the access attempt exists. For example, the REE 210 may be associated with the software application and may identify whether there is an attempt to access the applet via an application programming interface (API) defined for use of the applet. For example, the API may include an open mobile API or a security chip API defined for the security element 230. The access may be a non-initial access to the applet via the API using the software application. In other words, the access rule related to the software application may have already been stored in the applet.

For example, the function may include at least one of generation or deletion of a key, generation or verification of a signature, encryption or decryption of data, or storage or deletion of data. For example, through use of the function, storage or deletion of data for a transportation card or a credit card, charging of the transportation card, or generation or deletion of a car key may be performed.

In operation 920, the processor 120 may deliver certification information and package information from the REE 210 to the TEE 220. For example, the REE 210 may transmit the certification information and the package information to the TEE 220. For example, the certification information may include a certificate of the software application or a hashed value of the certificate. For example, the package information may include at least one of a package name or an application identifier (AID) of the software application.

According to an embodiment, before the processor 120 delivers the certification information and the package information from the REE 210 to the TEE 220, the processor 120 may perform an integrity check. For example, the processor 120 may perform the integrity check in response to identifying the access to the applet via the API. For example, the integrity check may be performed based on a service module of the REE 210 and an integrity check TA of the TEE 220. An integrity check of the electronic device 101 may include checking state information of the electronic device 101. For example, the state information of the electronic device 101 may include root of trust (RoT) information. The RoT information may include at least one of a verified boot state, information indicating whether the electronic device 101 is in a locked state, an operating system version (OS version), a patch time point, or a patch level.

According to an embodiment, when a result of the integrity check is a failure, the processor 120 may restrict use of the API. The failed result of the integrity check may indicate that there is a problem with the integrity of the electronic device 101. For example, in a case that the electronic device 101 is a rooted terminal or has downloaded abnormal firmware, the electronic device 101 may be identified as having an integrity problem. For example, the electronic device 101 may transmit, to a service provider (e.g., TSM) of the software application, information to indicate that the result of the integrity check is a failure. In addition, the electronic device 101 may display a visual object (e.g., the visual object 730 of FIG. 7A) to indicate the failure of the integrity check.

According to an embodiment, when a result of the integrity check is a success, the processor 120 may perform an allow list check. For example, the REE 210 may check whether the software application is included in the allow list. The successful result of the integrity check may indicate that there is no problem with the integrity of the electronic device 101. For example, in a case that the electronic device 101 has integrity, the REE 210 may perform the allow list check by using the service module. The allow list may be obtained from an external electronic device (e.g., a KMS 300). The allow list may include information with respect to at least one software application. For example, the information with respect to the at least one software application may include at least one of certification information of the software application or package information of the software application. For example, when the software application is included in the at least one software application of the allow list, the REE 210 may deliver the certification information and the package information to the TEE 220. For example, the REE 210 may provide the package information and the certification information to a service TA of the TEE 220.

According to an embodiment, when the software application is different from the at least one software application of the allow list, the processor 120 may display a visual object (e.g., the visual object 730 of FIG. 7B) to indicate that the software application is an unauthorized software application.

According to an embodiment, the processor 120 may obtain identification information from the security element 230. For example, the TEE 220 may obtain the identification information. For example, the identification information may include a unique value indicating the security element 230. For example, the TEE 220 may obtain the identification information from the security element 230 by using the service TA. Alternatively, for example, by using the service TA, the TEE 220 may encrypt the identification information obtained from the security element 230 and store it in memory of the REE 210, and, when necessary, may obtain and decrypt the identification information from the memory for reuse. The term 'when necessary' may include a case in which the TEE 220 is provided with the package information and the certification information from the REE 210 to calculate the following access rule. However, an embodiment of the present disclosure is not limited thereto.

In operation 930, the processor 120 may generate a value for controlling an access to an applet, on the TEE 220. The value for controlling an access to the applet may be referred to as an access rule calculated in the TEE 220. For example, the TEE 220 may generate the value for controlling an access to the applet based on the package information, the certification information, and the identification information. For example, the service TA of the TEE 220 may calculate an access rule for the applet based on the package information, the certification information, and the identification information. The calculated access rule may include a hashed value based on the package information, the certification information, and the identification information.

In operation 940, the processor 120 may execute a function of the applet based on the value. For example, the processor 120 may transmit the value to the security element 230, and when the value corresponds to another value in the security element 230, the processor 120 may control the execution of the function of the applet. The other value, which is a value pre-stored in the security element 230 for controlling an access to the applet, may be referred to as a stored access rule. For example, the stored access rule, which is the other value, may be generated and stored based on a local region of the electronic device 101, as described in FIGS. 4A and 4B. Alternatively, the stored access rule, which is the other value, may be generated and stored based on an external electronic device (e.g., the KMS 300) connected to the electronic device 101, as described in FIG. 5.

According to an embodiment, the processor 120 may transmit the calculated access rule to the security element 230. For example, the TEE 220 may transmit, to the security element 230, a command for storing the calculated access rule in the security element 230. For example, the TEE 220 may transmit, via a security channel, the command including the access rule to a sub-domain (e.g., the SD 250 of FIG. 2) of the security element 230, by using the service TA. For example, the access rule may be included in a header of the command. For example, the command may be encrypted via a shared key (service TA-SD) between the service TA and the SD 250. The shared key (service TA-SD) may be pre-injected (or pre-stored) at the time of manufacturing the electronic device 101.

According to an embodiment, the security element 230 may compare a stored access rule with a calculated access rule. For example, the applet may identify the calculated access rule by decrypting the command based on the shared key (service TA-SD). The applet may compare the calculated access rule with the stored access rule.

According to an embodiment, the security element 230 may execute a function of the applet. For example, when the calculated access rule corresponds to the stored access rule, the applet may execute the function according to the command. The applet executing the function according to the command may include performing an operation according to the function requested by the authorized software application via the API. In contrast, when the calculated access rule does not correspond to the stored access rule, the applet may ignore the command. In other words, when the calculated rule is different from the stored access rule, the applet may terminate the operation without executing the command.

As described above, an electronic device 101 may comprise a processor 120. The electronic device 101 may comprise a security element 230. The processor 120 may be configured to identify, based on a software application, an event for executing a function of an applet in the security element 230. The processor 120 may be configured to deliver, based on the identified event, certification information of the software application and package information of the software application from a rich execution environment (REE) of the processor 120 to a trusted execution environment (TEE) of the processor 120. The processor 120 may be configured to generate, based on identification information of the security element 230 obtained from the security element 230, the certification information, and the package information, a value for controlling an access to the applet, on the TEE. The processor 120 may be configured to execute, based on the value, the function.

According to an embodiment, the processor 120 may be configured to deliver, based on a shared key between the TEE and the security element 230 stored in the security element 230, an encrypted command from the TEE to the security element 230. The command may include the value. The processor 120 may be configured to execute the function based on the security element 230, in response to another value for controlling an access to the applet corresponding to the value, the another value stored in the security element 230.

According to an embodiment, the value may be included in a header of the command. The command may be delivered via a security channel between the TEE and the security element 230, the command requesting to perform the function of the applet.

According to an embodiment, the processor 120 may be configured to execute another software application for a key management system (KMS) 300 connected to the electronic device 101 to store the another value in the security element 230. The processor 120 may be configured to obtain the package information of the software application and the identification information of the security element 230 by using the executed another software application. The processor 120 may be configured to transmit the obtained package information and the obtained identification information to the KMS 300. The processor 120 may be configured to deliver another command for storing the another value obtained from the KMS 300 to the security element 230.

According to an embodiment, the another command may be encrypted based on another shared key between the KMS and the security element 230. The another value may be stored in the security element 230 by the another command being decrypted based on the another shared key in the security element 230.

According to an embodiment, the processor 120 may be configured to identify, based on the software application, whether the electronic device 101 has integrity in response to an initial access to the applet. The processor 120 may be configured to identify, in response to identifying that the electronic device 101 has the integrity, whether the software application is included in an allow list. The processor 120 may be configured to generate, in response to the software application being included in the allow list, the another value on the TEE, based on the identification information, the certification information, and the package information. The processor 120 may be configured to deliver another command for storing the another value to the security element 230, the another command encrypted based on the shared key and including the another value.

According to an embodiment, the another value may be stored in the security element 230 by the another command being decrypted based on the shared key in the security element 230.

According to an embodiment, the processor 120 may be configured to generate a security element key (SEK) to provide a service related to the security element 230 and a request for a signature for the security element key. The processor 120 may be configured to transmit the security element key and the request to a hardware security module (HSM) 400. The processor 120 may be configured to obtain a first certificate with respect to the security element key from the HSM 400. The processor 120 may be configured to generate a sub-key chained with the security element key and a second certificate with respect to the sub-key.

According to an embodiment, the processor 120 may be configured to perform verification of an asymmetric key related to the sub-key of a first security domain in the security element 230 by using the sub-key. The processor 120 may be configured to store, in response to a success of the verification, the shared key in a second security domain which is a sub-domain of the first security domain. The verification of the asymmetric key may include verification between a first shared value generated by using the sub-key and a second shared value generated by using the asymmetric key, based on the first certificate and the second certificate.

According to an embodiment, the certification information may include at least one of a hashed value of a certificate of the software application or the certificate. The package information may include a package name of the software application. For example, the package name may include an application identifier (AID). The identification information may include a unique value indicating the security element 230.

According to an embodiment, the value generated on the TEE may be hashed based on the hashed value or the certificate, the package name, and the unique value.

According to an embodiment, the processor 120 may be configured to identify, in response to the event, whether the electronic device 101 has the integrity. The processor 120 may be configured to identify, in response to identifying that the electronic device 101 has the integrity, whether the software application is included in an allow list. The certification information and the package information may be delivered from the REE to the TEE in response to the software application being included in the allow list. The allow list may be obtained from a key management system (KMS) 300 connected to the electronic device 101, and may include information with respect to at least one software application.

According to an embodiment, the processor 120 may be configured to display, via a display of the electronic device 101, a visual object to indicate a failure of integrity verification, in response to identifying that the electronic device 101 does not have the integrity.

According to an embodiment, the processor 120 may be configured to display, via the display of the electronic device 101, a visual object to indicate that the software application is an unauthorized software application, in response to identifying that the software application is different from the at least one software application of the allow list.

According to an embodiment, the function may be associated with the software application and may be requested via an application programming interface (API) defined for use of the applet. The function may include at least one of generation or deletion of a key, generation or verification of a signature, encryption or decryption of data, or storage or deletion of data.

As described above, a method performed by an electronic device 101 may comprise identifying, based on a software application, an event for executing a function of an applet in a security element 230 of the electronic device 101. The method may comprise delivering, based on the identified event, certification information of the software application and package information of the software application from a rich execution environment (REE) to a trusted execution environment (TEE). The method may comprise generating, based on identification information of the security element 230 obtained from the security element 230, the certification information, and the package information, a value for controlling an access to the applet, on the TEE. The method may comprise executing, based on the value, the function.

According to an embodiment, the method may comprise delivering, based on a shared key between the TEE and the security element 230 stored in the security element 230, an encrypted command from the TEE to the security element 230. The command may include the value. The method may comprise executing the function based on the security element 230, in response to another value for controlling an access to the applet corresponding to the value, the another value stored in the security element 230.

According to an embodiment, the method may comprise executing another software application for a key management system (KMS) connected to the electronic device 101 to store the another value in the security element 230. The method may comprise obtaining the package information of the software application and the identification information of the security element 230 by using the executed another software application. The method may comprise transmitting the obtained package information and the obtained identification information to the KMS. The method may comprise delivering another command for storing the another value obtained from the KMS to the security element 230.

According to an embodiment, the another command may be encrypted based on another shared key between the KMS and the security element 230. The another value may be stored in the security element 230 by the another command being decrypted based on the another shared key in the security element 230.

As described above, an electronic device 101 may comprise memory 130. The electronic device 101 may comprise at least one processor 120 including a security element 230. The memory 130 may include one or more instructions that, when executed by the at least one processor 120, cause the at least one processor 120 to identify, based on a software application, an event for executing a function of an applet in the security element 230 of the electronic device 101. The memory 130 may include one or more instructions that, when executed by the at least one processor 120, cause the at least one processor 120 to deliver, based on the identified event, certification information of the software application and package information of the software application from a rich execution environment (REE) to a trusted execution environment (TEE). The memory 130 may include one or more instructions that, when executed by the at least one processor 120, cause the at least one processor 120 to generate, based on identification information of the security element 230 obtained from the security element 230, the certification information, and the package information, a value for controlling an access to the applet, on the TEE. The memory 130 may include one or more instructions that, when executed by the at least one processor 120, cause the at least one processor 120 to execute, based on the value, the function.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device(101) comprising:
at least one processor(120) including processing circuitry;
a security element(230); and
memory(130) comprising one or more storage media storing instructions;
wherein the instructions, when executed by the at least one processor(120), cause the electronic device(101) to:
based on a software application, identify an event for executing a function of an applet in the security element(230);
based on the identified event, deliver certification information of the software application and package information of the software application from a rich execution environment (REE) of the at least one processor(120) to a trusted execution environment (TEE) of the at least one processor(120);
based on identification information, the certification information, and the package information of the security element(230) obtained from the security element(230), generate a value for controlling an access to the applet, on the TEE; and
based on the value, execute the function.

2. The electronic device(101) of claim 1,
wherein the instructions, when executed by the at least one processor(120), cause the electronic device(101) to:
based on a shared key between the TEE and the security element(230) stored in the security element(230), deliver an encrypted command from the TEE to the security element(230), the command including the value; and
in response to another value for controlling an access to the applet corresponding to the value, execute the function based on the security element(230), the another value stored in the security element(230).

3. The electronic device(101) of claim 2,
wherein the value is included in a header of the command, and
wherein the command is delivered via a security channel between the TEE and the security element(230), the command requesting to perform the function of the applet.

4. The electronic device(101) of claim 2,
wherein the instructions, when executed by the at least one processor(120), cause the electronic device(101) to:
execute another software application for a key management system (KMS) connected to the electronic device(101) to store the another value in the security element(230);
obtain the package information of the software application and the identification information of the security element(230) by using the executed another software application;
transmit the obtained package information and the obtained identification information to the KMS; and
deliver another command for storing the another value obtained from the KMS to the security element(230).

5. The electronic device(101) of claim 4,
wherein the another command is encrypted based on another shared key between the KMS and the security element(230); and
wherein the another value is stored in the security element(230) by the another command being decrypted based on the another shared key in the security element(230)

6. The electronic device(101) of claim 2,
wherein the instructions, when executed by the at least one processor(120), cause the electronic device(101) to:
based on the software application, identify whether the electronic device(101) has integrity in response to an initial access to the applet;
in response to identifying that the electronic device(101) has the integrity, identify whether the software application is included in an allow list;
in response to the software application being included in the allow list, generate the another value on the TEE, based on the identification information, the certification information, and the package information; and
deliver another command for storing the another value to the security element(230), the another command encrypted based on the shared key and including the another value,
wherein the another value is stored in the security element(230) by the another command being decrypted based on the shared key in the security element(230).

7. The electronic device(101) of claim 6,
wherein the instructions, when executed by the at least one processor(120), cause the electronic device(101) to:
generate a security element(230) key to provide a service related to the security element(230) and a request for a signature for the security element(230) key;
transmit the security element(230) key and the request to a hardware security module (HSM);
obtain a first certificate with respect to the security element(230) key from the HSM; and
generate a sub-key chained with the security element(230) key and a second certificate with respect to the sub-key.

8. The electronic device(101) of claim 7,
wherein the instructions, when executed by the at least one processor(120), cause the electronic device(101) to:
perform verification of an asymmetric key related to the sub-key of a first security domain in the security element(230) by using the sub-key; and
in response to a success of the verification, cause the shared key to be stored in a second security domain which is a sub-domain of the first security domain;
wherein the verification of the asymmetric key includes verification between a first shared value generated by using the sub-key and a second shared value generated by using the asymmetric key, based on the first certificate and the second certificate.

9. The electronic device(101) of claim 1,
wherein the certification information includes at least one of a hashed value of a certificate of the software application or the certificate,
wherein the package information includes a package name of the software application,
wherein the identification information includes a unique value indicating the security element(230), and
wherein the value generated on the TEE is hashed based on the hashed value or the certificate, the package name, and the unique value.

10. The electronic device(101) of claim 1,
wherein the instructions, when executed by the at least one processor(120), cause the electronic device(101) to:
in response to the event, identify whether the electronic device(101) has the integrity; and
in response to identifying that the electronic device(101) has the integrity, identify whether the software application is included in an allow list,
wherein the certification information and the package information are delivered from the REE to the TEE in response to the software application being included in the allow list, and
wherein the allow list is obtained from a key management system (KMS) connected to the electronic device(101), the allow list including information with respect to at least one software application,

11. The electronic device(101) of claim 10,
wherein the instructions, when executed by the at least one processor(120), cause the electronic device(101) to:
in response to identifying that the electronic device(101) does not have the integrity, display, via the display of the electronic device(101), a visual object to indicate a failure of integrity verification.

12. The electronic device(101) of claim 10,
wherein the instructions, when executed by the at least one processor(120), cause the electronic device(101) to:
in response to identifying that the software application is different from the at least one software application of the allow list, display, via the display of the electronic device(101), a visual object to indicate that the software application is an unauthorized software application.

13. The electronic device(101) of claim 1,
wherein the function is associated with the software application and is requested via an application programming interface (API) defined for use of the applet,
wherein the function includes at least one of:
generation or deletion of a key,
generation or verification of a signature,
encryption or decryption of data, or
storage or deletion of data.

14. A method performed by an electronic device(101) comprising:
based on a software application, identifying an event for executing a function of an applet in the security element(230) of the electronic device(101);
based on the identified event, delivering certification information of the software application and package information of the software application from a rich execution environment (REE) to a trusted execution environment (TEE);
based on the identification information, the certification information, and the package information of the security element(230) obtained from the security element(230), generating a value for controlling an access to the applet, on the TEE; and
based on the value, executing the function.

15. A non-transitory computer-readable storage medium, when executed individually or collectively by at least one processor(120) of an electronic device(101) including a security element(230), storing one or more programs including instructions that cause the electronic device(101) to:
based on a software application, identify an event for executing a function of an applet in the security element(230);
based on the identified event, deliver certification information of the software application and package information of the software application from a rich execution environment (REE) of the at least one processor(120) to a trusted execution environment (TEE) of the at least one processor(120);
based on the identification information, the certification information, and the package information of the security element(230) obtained from the security element(230), generate a value for controlling an access to the applet, on the TEE; and
based on the value, execute the function.
